# EUROPÄISCHE PATENTSCHRIFT

(11) **EP 0 893 933 B1**
(45) Veröffentlichungstag und Bekanntmachung des Hinweises auf die Patenterteilung: **20.12.2006**
(21) Anmeldenummer: 98440161.2
(22) Anmeldetag: 24.07.1998
(51) Int. Cl.: H04Q 9/00, H04Q 7/38

(54) **Verfahren zur Steuerung der Anrufleitung**
Method for controlling the routing of calls
Procédé de contrôle d'acheminement d'appels

(30) Priorität: 26.07.1997 DE 19732294
(43) Veröffentlichungstag der Anmeldung: 27.01.1999
(73) Patentinhaber: ALCATEL, 75008 Paris (FR)
(72) Erfinder: Stahl, Uwe, 71229 Leongerg (DE); Tessmar, Gerhard, 71229 Leonberg (DE); Lautenschlager, Wolfgang, 71287 Weissach-Flacht (DE)
(74) Vertreter: Rausch, Gabriele

(56) Entgegenhaltungen:
- EP-A- 0 700 227
- WO-A-97/01918
- WO-A-97/11567
- DE-A- 19 617 440

## Beschreibung

Die Erfindung betrifft ein Verfahren zum Steuern der Anrufleitung durch ein Kommunikationsnetz nach dem Oberbegriff von Anspruch 1 sowie ein Kommunikationsendgerät nach dem Oberbegriff von Anspruch 10.

Die Erfindung geht von einem Kommunikationssystem aus, wie es in EP 0738093 beschrieben ist. In diesem Kommunikationssystem ist ein Teilnehmer unter einer einheitlichen Rufnummer erreichbar, obwohl er über mehrere verschiedenartige Kommunikationsendgeräte, beispielsweise über ISDN, GSM oder DECT Endgeräte, verfügt, unter denen er abwechselnd erreichbar ist.

Eine an den Teilnehmer gerichtete Verbindungsanforderung wird zu einem zentralen Netzknoten des Kommunikationssystems geleitet. Dieser Knoten werte die persönliche Rufnummer des Teilnehmers in die physikalische Rufnummer desjenigen Endgerätes um, unter dem der Teilnehmer registriert ist. Die Verbindung wird somit im Folgenden zu demjenigen Endgerät aufgebaut, unter dem der Teilnehmer registriert ist.

Die Registrierung erfolgt hierbei manuell durch explizites Absenden einer Steuernachricht vom Teilnehmer an den zentralen Knoten oder automatisch durch ein DECT Zugangssystem (DECT = Digital European Cordless Telephone), in dessen Funkbedeckungsbereicht sich der Teilnehmer mit seinem DECT Endgerät bewegt. Die Funk-Festnetzstation des DECT Zugangssystems erkennt hierbei den Eintritt des DECT Endgerätes in ihren Funkbedeckungsbereich und führt die Registrierung im zentralen Knoten durch.

Aus EP 0297616 A1 ist weiter ein rechnergesteuertes Funkteilnehmerendgerät bekannt, das zum Betrieb in Mobilfunknetzen mit unterschiedlicher Systemtechnik geeignet ist.

Dieses Funkteilnehmerendgerät weist zwei Kommunikationseinheiten auf. Die eine Kommunikationseinheit stellt die notwendigen Mittel für die Kommunikation über ein erstes Mobilfunknetz bereit und die andere Kommunikationseinheit stellt die Mittel für die Kommunikation über ein verschiedenartiges zweites Mobilfunknetz bereit. Weiter verfügt das Funkteilnehmerendgerät über eine Auswerteeinrichtung, die anhand der Feldstärke der beiden Mobilfunknetze bestimmt, welche der beiden Kommunikationseinheiten aktiviert und welche gesperrt wird.

EP 0 700 227 A offenbart ein Telefon, das sowohl in einem schnurlosen System wie in einem zellularen System betrieben werden kann, WO 97 01918 ein Verfahren zur Positionsbestimmung eines angerufenen Teilnehmers.

Der Erfindung liegt die Aufgabe zugrunde, eine kostengünstige Kommunikation mit einem mobilen Teilnehmer zu ermöglichen.

Diese Aufgabe wird gelöst durch ein Verfahren zum Steuern der Anrufleitung nach der Lehre von Anspruch 1 sowie durch ein Kommunikationsendgerät nach der Lehre von Anspruch 10.

Der Erfindung liegt der Gedanke zugrunde, ein Kommunikationsendgerät mit einer Schnittstelle zu einem Mobilfunknetz und zu Funk-Festnetzstationen vorzusehen, das die netzseitige Wegeleitung von an das Endgerät gerichteten Verbindungsanforderungen durch Signalisierung über das Mobilfunknetz steuert. Hierdurch ergibt sich zum einen der Vorteil, daß ein mobiler Teilnehmer unter seiner Rufnummer jeweils über das (kosten)günstigste Zugangsnetz erreichbar ist und zum anderen, daß netzseitig der Aufwand für die Einführung dieses Leistungsmerkmals recht gering ist.

Vorteilhafte Ausgestaltungen der Erfindung sind den Unteransprüchen zu entnehmen.

Es ist hierbei insbesondere vorteilhaft, daß das Endgerät die netzseitige Wegeleitung mittels bereits vorhandener Signalisierungsnachrichten des Mobilfunknetzes steuert, beispielsweise mittels der Signalisierungsnachrichten zur Anmeldung oder Abmeldung eines Endgerätes steuert. Hierdurch ist es möglich, für die Durchführung der Erfindung keinerlei Eingriffe an der netzseitigen Infrastruktur vornehmen zu müssen. Es ist lediglich ein neuartiges Endgerät erforderlich.

Im Folgenden wird die Erfindung anhand zweier Ausführungsbeispiele unter Zuhilfenahme beiliegender Zeichnung beispielhaft erläutert.
- Fig. 1: zeigt ein Blockschaltbild eines Kommunikationssystems mit einem erfindungsgemäßen Kommunikationsendgerät
- Fig. 2: zeigt ein detaillierteres Blockschaltbild des erfindungsgemäßen Kommunikationsendgerätes nach Fig. 1
- Fig. 3a: zeigt ein Zeitdiagramm eines Verbindungsaufbaus zu dem erfindungsgemäßen Kommunikationsendgerät nach einem ersten Ausführungsbeispiel
- Fig. 3b: zeigt ein Zeitdiagramm eines Verbindungsaufbaus zu dem erfindungsgemäßen Kommunikationsendgerät nach einem zweiten Ausführungsbeispiel

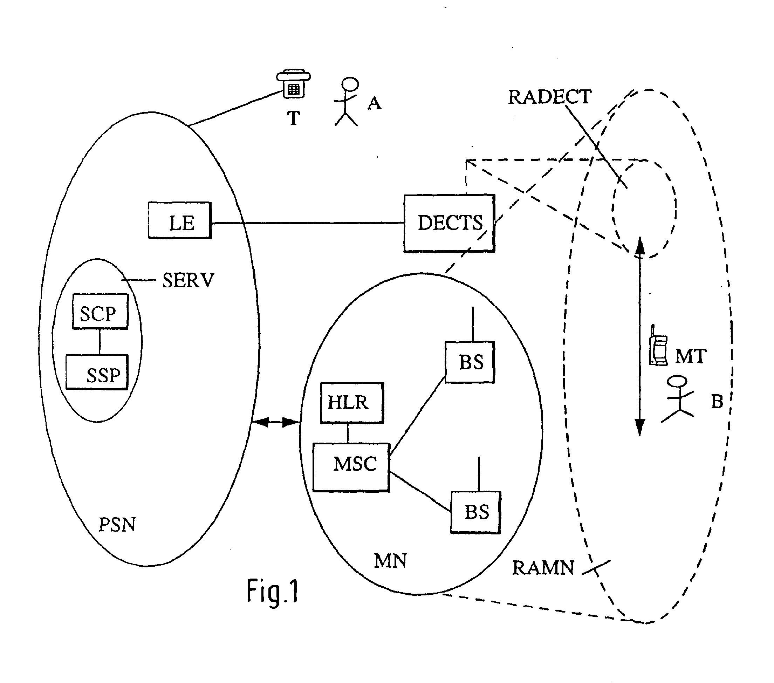

Fig. 1 zeigt ein Kommunikationssystem mit zwei Kommunikationsnetzen PSN und MN, einer Funk-Festnetzstation DECTS und zwei Endgeräten T und MT, denen jeweils ein Teilnehmern A bzw. B zugeordnet ist. Die Funk-Festnetzstation DECTS bedient einen Funkbedeckungsbereich RADECT und das Kommunikationsnetz MN einen Funkbedeckungsbereich RAMN.

Bei dem Kommunikationsnetz PSN handelt es sich um ein öffentliches Fernsprechnetz. Das Kommunikationsnetz MN ist ein zelluläres Mobilfunknetz, beispielsweise nach dem GSM Standard (GSM = Global ...) oder... Standard. Zwischen den Kommunikationsnetzen PSN und MN besteht zumindest ein Netzübergang, so daß der Aufbau von Verbindungen zwischen Endgeräten dieser Netze möglich ist.

Es ist auch möglich, daß das Kommunikationsnetz PSN aus ein oder mehreren privaten oder aus mehreren miteinander verbundenen privaten und öffentlichen Kommunikationsnetzen gebildet wird. Weiter ist es auch möglich, daß das Kommunikationsnetz PSN aus Teilnetzen aufgebaut ist, die unterschiedlichen Netzbetreibern zugeordnet sind. Das Mobilfunknetz MN kann ebenso aus Teilnetzen unterschiedlicher Netzbetreiber aufgebaut sein.

Von den Vermittlungsstellen des Kommunikationsnetzes PSN sind beispielhaft nur zwei Vermittlungsstellen SSP und LE gezeigt. Weiter weist das Kommunikationsnetz PSN eine Dienststeuereinrichtung SCP auf.

Die Vermittlungsstelle LE stellt eine Teilnehmervermittlungsstelle dar, an die die Funk-Festnetzstation DECTS angeschlossen ist.

Die Vermittlungsstelle SSP stellt eine Dienstvermittlungsstelle dar, die zusammen mit der Dienststeuereinrichtung SCP einen Dienst im Kommunikationsnetz PSN bereitstellen und so zusammen mit dieser eine Diensteinheit SERV bildet. Die Vermittlungsstelle SSP und die Dienststeuereinrichtung SCP wirken hierbei gemäß der IN Spezifikation (IN = Intelligent Network) zusammen und sind gemäß dieser Spezifikation aufgebaut. Es ist natürlich auch möglich, daß die Diensteinheit SERV anders realisiert ist, beispielsweise durch direkte Implementierung der Dienstelogik in die Steuerung einer Vermittlungsstelle des Kommunikationsnetzes KN.

Von den Komponenten des Mobilfunknetzes MN sind beispielhaft eine Mobilfunkvermittlungsstelle MSC, eine Heimatdatenbank HLR und zwei Basisstationen BS gezeigt. Der Aufbau und das Zusammenwirken dieser Komponenten kann beispielsweise dem GSM Standard entnommen werden.

Die Funk-Festnetzstation DECTS ist über mindestens einen analog Teilnehmeranschluß oder ISDN Anschluß (ISDN =Integrated Services Digital Network) mit dem Kommunikationsnetz PSN verbunden und stellt seinerseits einem oder mehreren Endgeräten, beispielsweise dem Endgerät MT, einen lokalen Zugang zum Kommunikationsnetz PSN über eine lokale Funkschnittstelle zur Verfügung. Diese von der Funk-Festnetzstation DECTS bereitgestellte Zugangsschnittstelle wir auch als "cordless access" bezeichnet. Es ist hierbei möglich, daß die Funk-Festnetzstation DECTS mehrere räumlich verteilte Funk Sende- und Empfangseinheiten umfaßt. Weiter ist möglich, daß die Funk-Festnetzstation DECTS Funktionen einer Nebenstellenanlage erbringt, sie somit mehreren Endgeräten über die Funkschnittstelle den Zugang zum Kommunikationsnetz PSN unter verschiedenen Nebenstellenrufnummern ermöglicht.

Die Funk-Festnetzstation DECTS ist vorzugsweise gemäß dem DECT Standard (DECT = Digital European Cordless Telephony) aufgebaut. Es ist jedoch auch möglich, daß die Funk-Festnetzstation DECTS gemäß dem ... Standard aufgebaut ist.

Bei dem Endgerät T handelt es sich um ein übliches Telekommunikations-Endgerät, beispielsweise um ein analoges Telefon, ein ISDN-Telefon, ein Fax oder um einen Computer mit einer entsprechenden Kommunikationskarte.

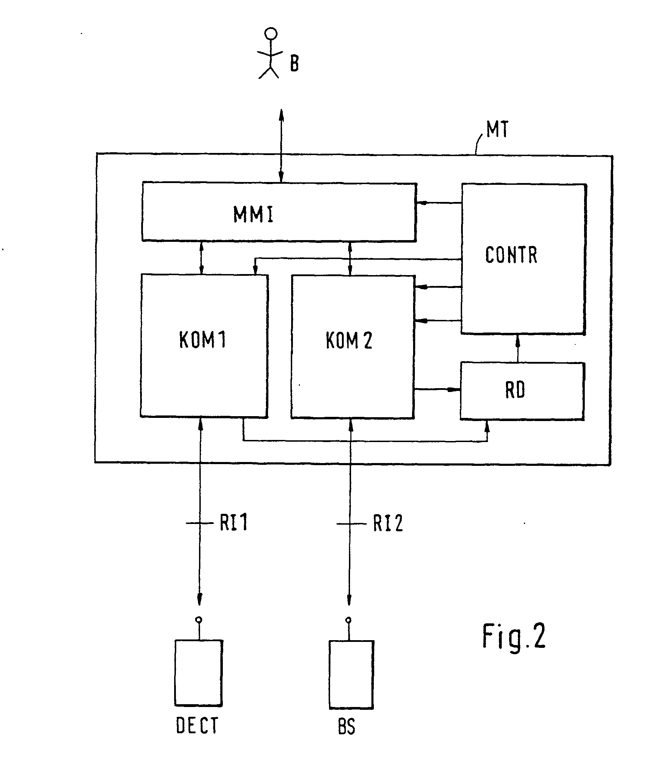

Bei dem Endgerät MT handelt es sich um ein speziell ausgestaltetes Endgerät, das im folgenden anhand von Fig. 2 näher beschrieben wird.

Fig. 2 zeigt das Kommunikationsendgerät MT, den Teilnehmer B, die Funk-Festnetzstation DECTS und die Basisstation BS.

Das Endgerät MT weist eine Ein- und Ausgabeeinheit MMI zum Teilnehmer B, zwei Kommunikationseinheiten KOM1 und KOM2, eine Funkfeldauswerteeinheit RD und eine Steuereinheit CONTR auf. Die Kommunikationseinheiten KOM1 und KOM2 tauschen über eine Funkschnittstelle RI1 bzw. RI2 Daten mit der Funk-Festnetzstation DECTS bzw. der Basisstation BS aus.

Die Kommunikationseinheit KOM1 wird durch Steuerbefehle der Steuereinheit CONTR aktiviert/deaktiviert und weist die Soft- und Hardware Komponenten auf, die für den Aufbau einer Kommunikationsverbindung zu der Funk-Festnetzstation DECTS und für den Austausch von Daten über eine solche Kommunikationsverbindung notwendig sind. Sie weist somit unter anderem einen Funksender und -Empfänger im entsprechenden Frequenzband und Protokoll-Bearbeitungseinheiten zur Abwicklung der entsprechenden Kommunikationsprotokolle auf. Der Aufbau und die Funktionsweise dieser Komponenten sind beispielsweise dem DECT Standard zu entnehmen.

Die Kommunikationseinheit KOM2 ist analog zur Kommunikationseinheit KOM1 für die Kommunikation mit dem Mobilfunknetz MN aufgebaut. Der Aufbau und die Funktionsweise der Komponenten der Kommunikationseinheit KOM2 sind beispielsweise dem GSM Standard zu entnehmen.

Die Ein- und Ausgabeeinheit MMI wird von beiden Kommunikationseinheiten KOM1 und KOM2 gemeinsam genutzt und stellt Schallwandler, Tastatur, und Display als Ein- und Ausgabemittel zum Teilnehmer A bereit. Die Ein- und Ausgabeeinheit MMI kann auch nur eine Auswahl dieser Mittel, aber auch weitere Mittel enthalten, beispielsweise um einen Bildfernsprecher zu realisieren. Durch Steuerbefehle der Steuereinheit CONTR werden diese Ein- und Ausgabemittel entweder der Kommunikationseinheit KOM1 oder der Kommunikationseinheit KOM2 zugeordnet.

Die Funkfeldauswerteeinrichtung RD dient dem Erkennen von Funkbedeckungsbereichen von Funk-Festnetzstationen. Hierfür bestimmt sie unter Verwendung von Komponenten der Kommunikationseinheit KOM1 die Funkfeldstärke im entsprechenden Frequenzbereich. Weiter ermittelt sie, wenn die Funkfeldstärke eine bestimmte Mindestgröße übersteigt, durch Auswertung der Funksignale eine der ausstrahlenden Funk-Festnetzstation zugeordnete Kennung. Weiter ermittelt die Funkfeldauswerteeinrichtung RD, ob die Funkfeldstärke einer ausgewählten Funk-Festnetzstation unter einen bestimmten Minimalwert fällt und meldet dies an die Steuereinheit CONTR.

Die Steuereinheit CONTR steuert die Kommunikationseinheiten KOM1 und KOM2 sowie die Ein- und Ausgabeeinheit MMI. Mittels der Funkfeldauswerteinrichtung RD ermittelt die Steureinheit, ob das Endgerät in den Funkbedeckungsbereich einer ausgewählten Funk-Festnetzstation bewegt wird, indem sie die von der Funkfeldauswerteeinrichtung ermittelte Kennung der ausstrahlenden Funk-Festnetzstation mit der Liste der ausgewählten Funk-Festnetzstationen vergleicht.

Es ist auch möglich, daß die Steuereinheit eine ausgewählte Funk-Festnetzstation dadurch bestimmt, daß sie mittels der Kommunikationseinheit KOM1 versucht, das Endgerät MT gegenüber der Funk-Festnetzstation zu autorisieren, wobei eine ausgewählte Funk-Festnetzstation eine solche Station ist, die das Endgerät MT autorisiert.

Hat die Steuereinheit CONTR ermittelt, daß das Endgerät MT in den Funkbedeckungsbereich einer ausgewählten Funk-Festnetzstation bewegt wird, so veranlaßt sie durch Senden von Signalisierungsnachrichten über die Funkschnittstelle RI2 zum Mobilfunknetz MN ein Umschalten der netzseitigen Wegeleitung von an das Endgerät MT gerichteten Verbindungsanforderungen zu der ermittelten, ausgewählten Funk-Festnetzstation. Das eigentliche Senden dieser Signalisierungsnachrichten wird hierbei von Komponenten der Kommunikationseinheit KOM2 durchgeführt, die von der Steuereinheit CONTR gesteuert werden

Das Umschalten der netzseitigen Wegeleitung beeinflußt nicht bereits bestehende Kommunikationsverbindungen, sonder erst zukünftige Kommunikationsverbindungen. Die Kommunikationseinheit KOM2 wird somit erst deaktiviert und die Ein- und Ausgabeeinheit MMI wird somit erst der Kommunikationseinheit KOM1 zugeordnet, nachdem nach dem Eintritt in den Funkbedeckungsbereich der Funk-Festnetzstation eine eventuell bestehende Kommunikationsverbindung mit dem Mobilfunknetz beendet worden ist.

Es ist auch möglich, das Umschalten erst zu veranlassen, nachdem das Endgerät in den Funkbedeckungsbereich einer ausgewählten Funk-Festnetzstation bewegt worden ist und eine möglicherweise bestehende Kommunikationsverbindung zum Mobilfunknetz MN beendet worden ist. In diesem Fall würden in Zusammenhang mit dem Initiieren dieses Umschaltens die Kommunikationseinheit KOM2 deaktiviert, die Kommunikationseinheit KOM1 aktiviert und die Ein- und Ausgabeeinheit MMI der Kommunikationseinheit KOM1 zugeordnet.

Meldet die Funkfeldauswerteeinrichtung RD, daß die Funkfeldstärke einer ausgewählten Funk-Festnetzstation unter einen bestimmten Minimalwert fällt und das Endgerät MT somit aus dem Funkbedeckungsbereich dieser Funk-Festnetzstation bewegt wird, so veranlaßt die Steuereinheit CONTR durch Senden von Signalisierungsnachrichten über die Funkschnittstelle Rl2 zum Mobilfunknetz MN eine Umschalten der netzseitigen Wegeleitung von an das Endgerät MT gerichteten Verbindungsanforderungen. Solche Verbindungsanforderung werden im Folgenden über das Mobilfunknetz MN und die Funkschnittstelle Rl2 zum Endgerät MT leitet. In Zusammenhang mit dem Initiieren dieses Umschaltens wird von der Steuereinheit die Kommunikationseinheit KOM1 deaktiviert, die Kommunikationseinheit KOM2 aktiviert und die Ein- und Ausgabeeinheit MMI der Kommunikationseinheit KOM2 zugeordnet.

Erkennt die Steuereinheit, daß das Endgerät MT aus dem - Funkbedeckungsbereich der Funk-Festnetzstation bewegt wird und noch eine Kommunikationsverbindung zur Funk-Festnetzstation besteht, so kann sie über die Ein- und Ausgabeeinheit MMI eine entsprechende Warnmeldung an den Teilnehmer B senden. Weiter ist es möglich, daß die Steuereinheit CONTR in diesem Fall so lange mit der Initiierung der netzseitigen Umschaltung der Wegeleitung wartet, bis die noch bestehende Kommunikationsverbindung beendet ist.

Es ist hierbei auch möglich, daß die Steuereinheit eine solche Umschaltung der Wegeleitung auf einen Eingabebefehl von dem Teilnehmer A hin veranlaßt. Dies hat den Vorteil, daß der Teilnehmer eine solche Umschaltung bereits veranlassen kann, wenn er demnächst den Funkbedeckungsbereich der ausgewählten Funk-Festnetzstation verlassen will. Dadurch wird die Gefahr der Unterbrechung einer Kommunikationsverbindung beim Verlassen des Funkbedeckungsbereiches der Funk-Festnetzstation verringert.

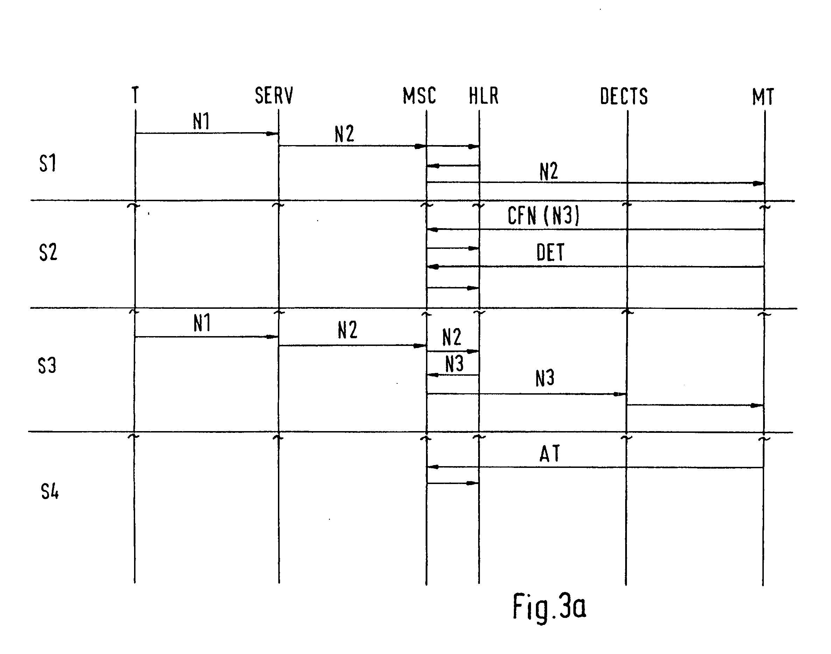

In einem ersten Ausführungsbeispiel wird nun eine erste Möglichkeit des Aufbaus einer Kommunikationsverbindung zwischen dem rufenden Endgerät T und dem gerufenen Endgerät MT anhand von Fig. 3a erläutert.

Fig. 3a zeigt in vier Szenarien S1 bis S4 Kommunikationsabläufe zwischen den Endgeräten T und MT, der Diensteinheit SERV, der Vermittlungsstelle MSC, der Heimatdatei HLR und der Funk-Festnetzstation DECT.

Im Szenario S1 befindet sich das Endgerät MT außerhalb des Funkbedeckungsbereiches der Funk-Festnetzstation DECTS.

Für den Aufbau einer Verbindung zum Teilnehmer B wählt der Teilnehmer A eine Rufnummer N1, bei der es sich um eine Festnetzrufnummer des Kommunikationsnetzes PSN handelt. Die Verbindungsanforderung mit der Rufnummer N1 wird zu der Dienstvermittlungsstelle SSP geleitet. Die Ankunft dieser Verbindungsanforderung triggert dort die Dienststeuereinrichtung SCP. Die Diensteinheit SERV veranlaßt sodann ats Dienst eine Umwertung der gerufenen Rufnummer N1 in eine Rufnummer N2 und die Weiterleitung der Verbindungsanforderung mit der Rufnummer N2 als gerufene Rufnummer.

Die Rufnummer N2 ist eine Mobilfunkrufnummer des Mobilfunknetzes MN und adressiert das Endgerät MT innerhalb dieses Mobilfunknetzes MN. Die Verbindungsanforderung wird zur Mobilfunkvermittlungsstelle MSC weitergeleitet, wo mittels des entsprechenden Teilnehmerdatensatzes im HLR überprüft wird, ob das Endgerät MT im Mobilfunknetz MN angemeldet ist oder nicht. Ist es angemeldet, so wird die Verbindungsanforderung zum Endgerät MT weitergeleitet und anschließend die Verbindung zwischen dem Endgerät T und dem Endgerät MT aufgebaut.

Ist der Teilnehmer nicht erreichbar, weil er nicht erreicht werden will, wird die Verbindungsanforderung vom Kommunikationsnetz PSN zum Mobilfunknetzs MN mit dem Auslösungsgrund "nicht erreichbar" ausgelöst. Die Diensteinheit SERV steuert nun unter Vorgabe des Teilnehmer B, ob die Verbindungsanforderung nun trotzdem zur ausgewählten Funk-Festnetzstation DECTS gleitet werden soll, um dort beispielsweise einen Anrufbeantworter zu erreichen, ggf. über eine zweiter Rufnummer an einem ISDN Anschluß, oder ob die Verbindungsanforderung an eine Voice-Mailbox der Diensteinheit SERV geleitet werden soll.

Im Szenario S2 bewegt sich der Teilnehmer B mit seinem Endgerät MT in den Funkbedeckungsbereich der Funk-Festnetzstation DECTS.

Erkennt die Steuereinheit CONTR des Endgerätes MT, daß das Endgerät MT in den Funkbedeckungsbereich der ausgewählten Funk-Festnetzstation DECTS bewegt wird, so signalisiert sie zuerst einer Nachricht CFN(N3) an die Mobilfunkvermittlungsstellle MSC. Durch die Nachricht CFN(N3) wird der Vermittlungsstelle MSC signalisiert, eine Rufnummer N3, die die Rufnummer der Funk-Festnetzstation DECTS ist, als Alternativ-Ziel im Teilnehmersatz in der Heimatdatei HLR für den Fall einzurichten, daß das Endgerät MT nicht über das Mobilfunknetz MN erreichbar ist. Danach signalisiert die Steuereinheit CONTR eine Abmeldenachricht DET (detach message) an die Vermittlungsstelle MSC, die diesen Status in dem Teilnehmerdatensatz der Heimatdatei HLR vermerkt. Durch das Signalisieren der Abmeldenachricht DET wird die zuvor eingerichtete Rufumleitung aktiviert. Es erfolgt somit ein Umschalten der netzseitigen Anrufleitung für an das Endgerät MT gerichteten Verbindungsanforderungen, die nun über die Funk-Festnetzstation DECTS zum Endgerät MT geleitet werden.

Das Einrichten eines Alternativziels stellt ein Leistungsmerkmal eines GSM Mobilfunknetzes dar, so daß das Endgerät MT hierfür auf Standard-Mechanismen zurückgreifen kann.

Existieren für das Endgerät MT mehrere ausgewählte Funk-Festnetzstationen, so sind im Endgerät die Rufnummer dieser ausgewählten Funk-Festnetzstationen abgespeichert. Wird der Eintritt in den Funkbedeckungsbereich einer ausgewählten Funk-Festnetzstation ermittelt, so wird die jeweilige, dieser ausgewählten Funk-Festnetzstation zugeordnete Rufnummer als Alternativziel signalisiert.

Ist nur eine ausgewählte Funk-Festnetzstation für das Endgerät vorgesehen, so kann auf das jeweilige Einrichten eines Alternativziels verzichtet werden. Es reicht in diesem Fall aus, einmalig die ausgewählte Funk-Festnetzstation als Alternativziel einzurichten. Es ist auch möglich, daß das Einrichten eines Alternativziels vom Teilnehmer B durchgeführt wird.

Im Szenario S3 befindet sich das Endgerät MT im Funkbedeckungsbereiches der Funk-Festnetzstation DECTS.

Eine Verbindungsanforderung mit der gerufenen Rufnummer N1 wird von der Diensteinheit SERV auf die Rufnummer N2 umgewertet und zur Mobilfunkvermittlungsstelle MSC weitergeleitet. Diese erkennt durch Abfrage des Teilnehmerdatensatzes, daß das Endgerät MT, dem die Rufnummer N2 zugeordnet ist, abgemeldet ist und initiiert daraufhin den in der Heimatdatei HLR eingetragenen Rufumleitungs-Dienst. Dieser werte die gerufene Rufnummer der Verbindungsanforderung auf die Rufnummer N3 um und leitet so die Verbindungsanforderung über die Funk-Festnetzstation DECTS an das Endgerät MT weiter.

Im Szenario S4 bewegt sich der Teilnehmer B mit seinem Endgerät MT aus dem Funkbedeckungsbereich der Funk-Festnetzstation DECTS.

Erkennt die Steuereinheit CONTR des Endgerätes MT, daß das Endgerät MT aus dem Funkbedeckungsbereich der ausgewählten Funk-Festnetzstation DECTS bewegt wird, so signalisiert sie eine Anmeldenachricht AT (attach message) an die Vermittlungsstelle MSC, die diesen Status in dem Teilnehmerdatensatz der Heimatdatei vermerkt. Durch das Signalisieren der Anmeldenachricht DET wird die zuvor eingerichtete Rufumleitung deaktiviert. Es erfolgt damit ein Umschalten der netzseitigen Anrufleitung für an das Endgerät MT gerichteten Verbindungsanforderungen, die nun über das Mobilfunknetz MN zum Endgerät MT geleitet werden.

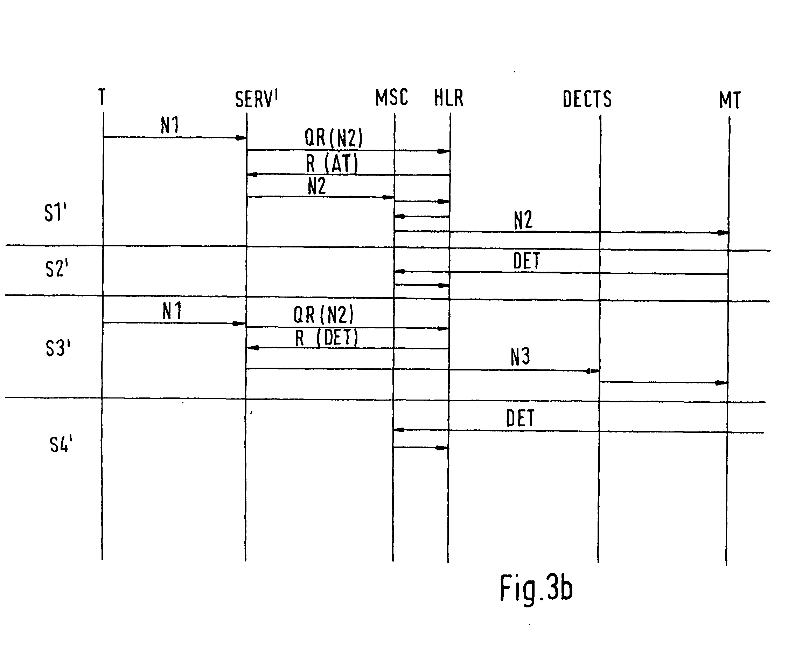

In einem zweiten Ausführungsbeispiel wird nun eine weitere Möglichkeit des Aufbaus einer Kommunikationsverbindung zwischen dem rufenden Endgerät T und dem gerufenen Endgerät MT anhand von Fig. 3b erläutert.

Fig. 3a zeigt in vier Szenerien S1' bis S4' Kommunikationsabläufe zwischen den Endgeräten T und MT, der Diensteinheit SERV', der Vermittlungsstelle MSC, der Heimatdatei HLR und der Funk-Festnetzstation DECT. Die Kommunikationssituationen in den Szenerien S1' bis S4' entsprechen hierbei denen der Szenerien S1 bis S4.

Im Szenario S1 wählt der Teilnehmer A die Rufnummer N1, eine Verbindungsanforderung mit der Rufnummer N 1 als gerufene Rufnummer wird zu der Dienstvermittlungsstelle SSP geleitet und trigger dort die Steuereinrichtung SCP. Die Diensteinheit SERV' veranlaßt sodann mittels einer an die Heimatdatenbank HLR gerichteten Abfrage QR(N2) die Abfrage des Status des Endgeräte MT, dem die Mobilfunkrufnummer N2 zugeordnet ist. Die Abfrage erfolgt hierbei über eine Kommunikationsverbindung zwischen der Dienststeuereinrichtung SCP und der Heimatdatenbank HLR, beispielsweise über das Nr. 7 Signalisierungsnetz oder über ein Paketnetz nach TCP/IP. Es ist auch möglich, daß die Dienststeuereinrichtung SCP und die Heimatdatenbank HLR auf der selben Software-Plattform ablaufen und für diese Abfrage Kommunikationsmechanismen dieser Software-Plattform verwendet werden.

Als Antwort auf die Abfrage QR(2) erfolgt eine Antwort R(AT), die anzeigt, daß das Endgerät MT im Mobilfunknetz MT angemeldet ist. Die Diensteinheit SERV werte sodann die gerufenen Rufnummer der Verbindungsanforderung auf die Rufnummer N2 um und die Verbindungsanforderung wird wie nach Fig. 3a über das Mobilfunknetz MN zum Endgerät MT geleitet.

Befindet sich der Teilnehmer außerhalb des Funkbedeckungsbereiches der Funk-Festnetzstation DECTS und ist nicht erreichbar, weil er nicht erreicht werden will, ergibt die Abfrage des Flags "MC Detach" in der Heimatdatenbank HLR die Meldung "nicht erreichbar". Die Diensteinheit SERV steuert nun unter Vorgabe des Teilnehmers, ob die Verbindungsanforderung beispielsweise zu einem Anrufbeantworter oder zu einer Voice-Mail Box zugestellt werden soll oder ob eine entsprechende Sprachansage angelegt werden soll.

Im Szenario S2 erkennt die Steuereinheit CONTR des Endgerätes MT, daß das Endgerät MT in den Funkbedeckungsbereich der ausgewählten Funk-Festnetzstation DECTS bewegt wird und signalisiert die Abmeldenachricht DET (detach message) an die Vermittlungsstelle MSC, die diesen Status in dem Teilnehmerdatensatz der Heimatdatei HLR vermerkt.

Es ist auch möglich, daß das Endgerät MT durch weitere Signalisierung das Ziel der Anrufweiterleitung durch die Diensteinheit SERV beeinflußt.

Beispielsweise verändert das Endgerät MT hierzu Parameter in der Heimatdatenbank HLR signalisiert das Ziel der Anrufweiterleitung direkte über die Vermittlungsstelle MSC an die Diensteinheit SERV'.

Im Szenario S3 wird wie im Szenario S1 eine Verbindungsanforderung mit der Rufnummer N1 als gerufene Rufnummer zu der Dienstvermittlungsstelle SSP geleitet, worauf die Diensteinheit SERV' die Abfrage QR(N2) an die Heimatdatenbank HLR startet. Als Antwort erfolgt eine Antwort R(DET), die anzeigt, daß das Endgerät MT im Mobilfunknetz MT abgemeldet ist. Die Diensteinheit SERV wertet die gerufene Rufnummer der Verbindungsanforderung sodann auf die Rufnummer N3 um und leitet die Verbindungsanforderung über die Funk-Festnetzstation DECTS an das Endgerät MT weiter.

Durch den Statuswechsel des Endgerätes MT in der Heimatdatenbank HLR von "angemeldet" auf "abgemeldet" wird somit ein Umschalten der netzseitigen Wegeleitung bewirkt. Die Verbindungsanforderung wird nun nicht mehr über das Mobilfunknetz MN, sondern über die Funk-Festnetzstation DECTS zum Endgerät MT geleitet.

Im Szenario S4 erkennt die Steuereinheit CONTR des Endgerätes MT, daß das Endgerät MT aus dem Funkbedeckungsbereich der ausgewählten Funk-Festnetzstation DECTS bewegt wird und signalisiert die Anmeldenachricht DET (detach message) an die Vermittlungsstelle MSC, die diesen Status in dem Teilnehmerdatensatz der Heimatdatei HLR vermerkt.

## Patentansprüche

1. Verfahren zum Steuern der Anrufleitung durch ein Kommunikationsnetz zu einem Kommunikationsendgerät (MT), das zur Kommunikation über eine erste Funkschnittstelle (Rl1) mit Funk-Festnetzstationen (DECTS) des Kommunikationsnetzes, insbesondere mit DECT-Stationen, und zur Kommunikation über eine zweite Funkschnittstelle (Rl2) mit einem Mobilfunknetz (MN) des Kommunikationsnetzes geeignet ist, wobei sowohl Funk-Festnetzstationen als auch das Mobilfunknetz mit einer Diensteinheit (SERV) im Kommunikationnetz verbunden sind,
**dadurch gekennzeichnet, dass** das Endgerät (MT) ermittelt, ob es in den Funkbedeckungsbereich von Funk-Festnetzstationen bewegt wird und dass das Endgerät (MT), wenn es in den Funkbedeckungsbereich (RADECT) einer ausgewählten Funk-Festnetzstation (DECTS) bewegt wird, ein Umschalten der netzseitigen Wegeleitung von Verbindungsanforderungen, die an das Endgerät (MT) gerichteten sind, auf eine Wegeleitung über die ausgewählte Funk-Festnetzstation (DECTS) mittels Signalisierung über das Mobilfunknetz (MN) initiiert wobei die Umschaltung in der Diensteinheit (SERV) des KommunikaHonnetzos erfolgt.

2. Verfahren nach Anspruch 1, **dadurch gekennzeichnet, dass** das Endgerät (MT) das Umschalten der netzseitigen Wegeleitung auf eine Wegeleitung über die ausgewählte Funk-Festnetzstation (DECTS) durch Signalisieren einer Abmeldenachricht (DET) an eine Diensteinheit (MSC, HLR) des Mobilfunknetzes initiiert, die auf die Abmeldenachricht (DET) eine Rufweiterleitung zu der ausgewählten Funk-Festnetzstation (DECTS) aktiviert.

3. Verfahren nach Anspruch 2, **dadurch gekennzeichnet, dass** das Endgerät (MT) vor dem Signalisieren der Abmeldenachricht (DET) eine Kennung der ausgewählten Funk-Festnetzstation als Ziel der Rufweiterleitung an die Diensteinheit (MSC, HLR) signalisiert.

4. Verfahren nach Anspruch 1, **dadurch gekennzeichnet, dass** das Endgerät (MT), wenn das Endgerät (MT) aus dem Funkbedeckungsbereich (RADECT) der ausgewählten Funk-Festnetzstation (DECTS) bewegt wird, ein Umschalten der netzseitigen Wegeleitung von Verbindungsanforderungen, die an das Endgerät (MT) gerichteten sind, auf eine Wegeleitung über das Mobilfunknetz (MN) mittels Signalisierung über das Mobilfunknetz (MN) initiiert.

5. Verfahren nach Anspruch 1, **dadurch gekennzeichnet, dass** das Endgerät auf eine Eingabe eines Teilnehmers ein Umschalten der netzseitigen Wegeleitung von Verbindungsanforderungen, die an das Endgerät gerichteten sind, auf eine Wegeleitung über das Mobilfunknetz mittels Signalisierung über das Mobilfunknetz initiiert.

6. Verfahren nach einem der Ansprüche 1 bis 5, **dadurch gekennzeichnet, dass** eine weitere Diensteinheit (SERV) des Kommunikationsnetzes die gerufene Rufnummer (N1) von Verbindungsanforderungen, die an das Endgerät gerichteten sind, auf die Mobilfunk-Rufnummer (N2) des Endgerätes (MT) umwertet.

7. Verfahren nach Anspruch 6, **dadurch gekennzeichnet, dass** die weitere Diensteinheit (SERV) von einer IN Diensteinheit gebildet wird.

8. Verfahren nach einem der Ansprüche 1, 4 oder 5, **dadurch gekennzeichnet, dass** eine Diensteinheit (SERV') des Kommunikationsnetzes in den Teilnehmerdaten des Mobilfunknetzes (MN) überprüft, ob das Endgerät (MT) dort als angemeldet oder abgemeldet registriert ist, und ein Rufweiterleitung zu der ausgewählten Funk-Festnetzstation (DECTS) aktiviert, wenn das Endgerät (MT) als abgemeldet registriert ist.

## Claims

1. Method for controlling the routing of calls through a communications network to a communications terminal device (MT) which is suitable for communication, via a first radio interface (RI1), with radio/fixed-network stations (DECTS) of the communications network, in particular with DECT stations, and for communication, via a second radio interface (RI2), with a mobile telephony network (MN) of the communications network, wherein both radio/fixed-network stations and the mobile telephony network are connected to a service unit (SERV) in the communications network, **characterized in that** the terminal device (MT) ascertains whether it is moved into the radio coverage area of radio/fixed-network stations, and the terminal device (MT), if it is moved into the radio coverage area (RADECT) of a selected radio/fixed-network station (DECTS), initiates, by means of signalling via the mobile telephony network (MN), a switchover of the network-side path routing of connection requests that are directed to the terminal device (MT) to a path routing via the selected radio/fixed-network station (DECTS), the switchover being effected in the service unit (SERV) of the communications network.

2. Method according to claim 1, **characterized in that** the terminal device (MT) initiates the switchover of the network-side path routing to a path routing via the selected radio/fixed-network station (DECTS) by signalling a detach message (DET) to a service unit (MSC, HLR) of the mobile telephony network, which service unit, in response to the detach message (DET), activates a call forwarding to the selected radio/fixed-network station (DECTS).

3. Method according to claim 2, **characterized in that** the terminal device (MT), before signalling the detach message (DET), signals to the service unit (MSC, HLR) an identification of the selected radio/fixed-network station as a destination of the call forwarding.

4. Method according to claim 1, **characterized in that** the terminal device (MT), if the terminal device (MT) is moved out of the radio coverage area (RADECT) of the selected radio/fixed-network station (DECTS), initiates, by means of signalling via the mobile telephony network (MN), a switchover of the network-side path routing of connection requests that are directed to the terminal device (MT) to a path routing via the mobile telephony network (MN).

5. Method according to claim 1, **characterized in that** the terminal device, in response to an input by a subscriber, initiates, by means of signalling via the mobile telephony network, a switchover of the network-side path routing of connection requests that are directed to the terminal device to a path routing via the mobile telephony network.

6. Method according to any one of claims 1 to 5, **characterized in that** a further service unit (SERV) of the communications network converts the called dial number (N1) of connection requests directed to the terminal device into the mobile telephony dial number (N2) of the terminal device (MT).

7. Method according to claim 6, **characterized in that** the further service unit (SERV) is constituted by an IN service unit.

8. Method according to any one of claims 1, 4 or 5, **characterized in that** a service unit (SERV') of the communications network checks, in the subscriber data of the mobile telephony network (MN), whether the terminal device (MT) is registered therein as attached or detached, and, if the terminal device (MT) is registered as detached, activates a call forwarding to the selected radio/fixed-network station (DECTS).

## Revendications

1. Procédé de contrôle de l'acheminement des appels à travers un réseau de communication vers un terminal de communication (MT) qui est conçu pour la communication avec des stations fixes de réseau de radiocommunication (DECTS) du réseau de communication, notamment avec des stations DECT, par le biais d'une première interface de radiocommunication (RI1) et pour la communication avec un réseau de radiocommunication mobile (MN) du réseau de communication par le biais d'une deuxième interface de radiocommunication (RI2) et, les stations fixes de réseau de radiocommunication ainsi que le réseau de radiocommunication mobile étant reliés avec une unité de service (SERV) dans le réseau de communication, **caractérisé en ce que** le terminal (MT) détermine s'il est déplacé dans la zone de couverture radioélectrique des stations fixes de réseau de radiocommunication et que le terminal (MT), lorsqu'il est déplacé dans la zone de couverture radioélectrique (RADECT) d'une station fixe de réseau de radiocommunication (DECTS) sélectionnée, initie au moyen de la signalisation sur le réseau de radiocommunication mobile (MN) un basculement de l'acheminement côté réseau des demandes de communication qui sont adressées au terminal (MT) en un acheminement par le biais des stations fixes de réseau de radiocommunication (DECTS) sélectionnées, le basculement s'effectuant dans l'unité de service (SERV) du réseau de communication.

2. Procédé selon la revendication 1, **caractérisé en ce que** le terminal (MT) initie le basculement de l'acheminement côté réseau en un acheminement par le biais des stations fixes de réseau de radiocommunication (DECTS) sélectionnées en envoyant un message de déconnexion (DET) à une unité de service (MSC, HLR) du réseau de radiocommunication mobile, qui, en recevant le message de déconnexion (DET), active un renvoi d'appel vers la station fixe de réseau de radiocommunication (DECTS) sélectionnée.

3. Procédé selon la revendication 2, **caractérisé en ce que** le terminal (MT), avant d'envoyer le message de déconnexion (DET), envoie à l'unité de service (MSC, HLR) un identifiant de la station fixe de réseau de radiocommunication sélectionnée comme destinataire du renvoi d'appel.

4. Procédé selon la revendication 1, **caractérisé en ce que** le terminal (MT), lorsque le terminal (MT) est déplacé hors de la zone de couverture radioélectrique (RADECT) de la station fixe de réseau de radiocommunication (DECTS) sélectionnée, initie au moyen de la signalisation sur le réseau de radiocommunication mobile (MN) un basculement de l'acheminement côté réseau des demandes de communication qui sont adressées au terminal (MT) en un acheminement par le biais du réseau de radiocommunication mobile (MN).

5. Procédé selon la revendication 1, **caractérisé en ce que** le terminal, sur une saisie d'un abonné, initie au moyen de la signalisation sur le réseau de radiocommunication mobile un basculement de l'acheminement côté réseau des demandes de communication qui sont adressées au terminal en un acheminement par le biais du réseau de radiocommunication mobile.

6. Procédé selon l'une des revendications 1 à 5, **caractérisé en ce qu'**une autre unité de service (SERV) du réseau de communication convertir le numéro appelé (N1) des demandes de communication qui sont adressées au terminal en le numéro d'appel de radiocommunication mobile (N2) du terminal (MT).

7. Procédé selon la revendication 6, **caractérisé en ce que** l'autre unité de service (SERV) est formée par une unité de service 1N.

8. Procédé selon l'une des revendications 1 à 4 ou 5, **caractérisé en ce qu'**une unité de service (SERV') du réseau de communication contrôle dans les données d'abonné du réseau de radiocommunication mobile (MN) si le terminal (MT) y est enregistré comme connecté ou déconnecté et active un transfert d'appel vers la station fixe de réseau de radiocommunication (DECTS) sélectionnée si le terminal (MT) est enregistré comme étant déconnecté.
